# EUROPEAN PATENT APPLICATION

(11) **EP 1 530 318 A1**
(43) Date of publication of application: **11.05.2005**
(21) Application number: 04022065.9
(22) Date of filing: 16.09.2004
(51) Int. Cl.: H04L 12/28, H04L 29/06

(54) **Electronic apparatus for encryption key updating**

(30) Priority: 31.10.2003 JP 2003372991
(71) Applicant: Kabushiki Kaisha Toshiba, Tokyo 105-8001 (JP)
(72) Inventor: Aihara, Tadahiro, Tokyo 105-8001 (JP)
(74) Representative: Henkel, Feiler & Hänzel

(57) **Abstract**

After an encryption key creating unit (112) creates/updates an encryption key, an encryption key update timing control unit (111) monitors whether or not the elapsed time since this time has reached the shortest holding time or longest holding time. If the shortest holding time has elapsed, the encryption key update timing control unit (111) monitors whether or not wireless communication is being executed by a wireless unit (16). If a state wherein no wireless communication is being executed is detected, the encryption key creating unit (112) is caused to create/update an encryption key at this timing. When the longest holding time has elapsed while this state is not detected, the encryption key update timing control unit (111) gives a wireless unit (16) an instruction to temporarily interrupt the wireless communication, and causes the encryption key creating unit (112) to create/update an encryption key during interruption of wireless communication.

## Description

The present invention relates to a cryptographic technique used when data communication is performed in an electronic apparatus such as a personal computer or access point.

With the recent advances in wireless communication techniques, wireless LANs (Local Area Networks) have begun to proliferate in office environments and the like in place of connection between electronic apparatuses through cables. In this wireless LAN, since data is transmitted/received through a wireless communication channel, encryption is generally performed by using WEP (Wired Equivalent Privacy) or the like to provide security against data leakage.

WEP is an encryption system which encrypts data by using a fixed encryption key. Recently, however, a great deal of attention has been paid to encryption systems such as TKIP (Temporal Key Integrity Protocol), WRAP (Wireless Robust Authenticated Protocol), and CCMP (Counter Mode/CBC MAC protocol), which allow updating of encryption keys to realize a safer security function. TKIP, WRAP, and CCMP are planned to be used in WPA (Wi Fi Protected Access) and IEEE802.11i which have recently been developed. WPA and IEEE802.11i define mechanisms for arbitrarily updating encryption keys used in these encryption systems.

Under the circumstances, various techniques of updating encryption keys at proper timings have been proposed (see, for example, U.S. Patent No. 5,708,711). According to the technique disclosed in the specification of U.S. Patent No. 5,708,711, one day is divided into time intervals, e.g., "morning", "afternoon", "evening", and "overnight", and a data communication state is analyzed for each time interval to determine the update timing of an encryption key. This makes it possible to decrease the probability that update processing of an encryption key will affect data communication processing.

The technique disclosed in U.S. Patent No. 5,708,711 is strictly designed to perform statistical estimation, but gives no consideration to whether an encryption key is actually updated at a proper timing. For example, a wireless LAN has a high throughput; 11 Mbps in IEEE802.11b and 54 Mbps in IEEE802.11a and IEEE802.11g, and hence is used not only as a means for simple data communication but also as a means for transmitting TV signals, video data, and the like that demand real time responsiveness. In transferring data that demand such real time responsiveness, when an encryption key is updated during transfer, a picture or sound is expected to be interrupted, thus considerably impairing its usability. As described above, the selection of an encryption key updating timing is very important.

The present invention has been made in consideration of the above situation, and has as its object to provide an electronic apparatus and an encryption key updating control method for the apparatus which can update encryption keys at proper timings.

In order to achieve the above object, an electronic apparatus according to an embodiment of the present invention characterized by comprising data communication means encryption key creating means for creating an encryption key used for encryption of data to be transmitted by the data communication means; monitoring means for monitoring a data communication state of the data communication means; time calculating means for calculating an elapsed time since an encryption key is created by the encryption key creating unit; and encryption key updating control means for causing the encryption key creating means to create a new encryption key at a timing at which a state in which no data communication is being executed is detected by the monitoring means after the elapsed time calculated by the time calculating unit reaches a predetermined shortest holding time.
an electronic apparatus according to another embodiment of the present invention characterized by comprising data communication means; encryption key creating means for creating an encryption key used for encryption of data to be transmitted by the data communication means; monitoring means for monitoring a data communication state of the data communication means; first time calculating means for calculating an elapsed time of a state in which after an end of data communication is detected by the monitoring means, a start of next data communication is not detected; and encryption key updating control means for causing the encryption key creating means to create a new encryption key at a timing at which'the start of data communication is detected by the monitoring means after the elapsed time calculated by the first time calculating unit has reached a predetermined reference interval time.

In the electronic apparatus according to the present invention, encryption key updating is inhibited until the shortest holding time elapses since the previous encryption key update time even while, for example, no data communication is executed, i.e., the situation is suitable for encryption key updating. This suppresses the unnecessary frequent occurrence of encryption key updating. Assume that after this shortest holding time elapses, the longest holding time elapses since the previous encryption key update time while data communication is executed, i.e., the situation is not suitable for encryption key updating. In this case, in consideration of safety, the data communication is temporarily interrupted, and encryption key updating is executed.

As described above, according to this electronic apparatus, encryption key updating is executed at a proper timing in consideration of the balance between efficiency and safety.

That is, according to the present invention, there can be provided an electronic apparatus and an encryption key updating control method which can execute encryption key updating at a proper timing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the connection form of a wireless LAN communication system according to the first embodiment of the present invention;
FIG. 2 is a block diagram showing the arrangement of a personal computer according to the first embodiment;
FIG. 3 is a chart for explaining the encryption key update timing selection principle of an encryption key update timing control unit in the first embodiment;
FIG. 4 is a flowchart showing the flow of processing up to the creation of the first encryption key by a personal computer of the first embodiment through association/authentication with an access point;
FIG. 5 is a flowchart showing the flow of encryption key update timing control performed by the personal computer in the first embodiment;
FIGS. 6A and 6B are charts for explaining the encryption key update timing of an encryption key update timing control unit in the second embodiment; and
FIG. 7 is a flowchart showing the flow of encryption key update timing control performed by the personal computer in the second embodiment.

The embodiments of the present invention will be described with reference to the views of the accompanying drawing.

### (First Embodiment)

The first embodiment of the present invention will be described first.

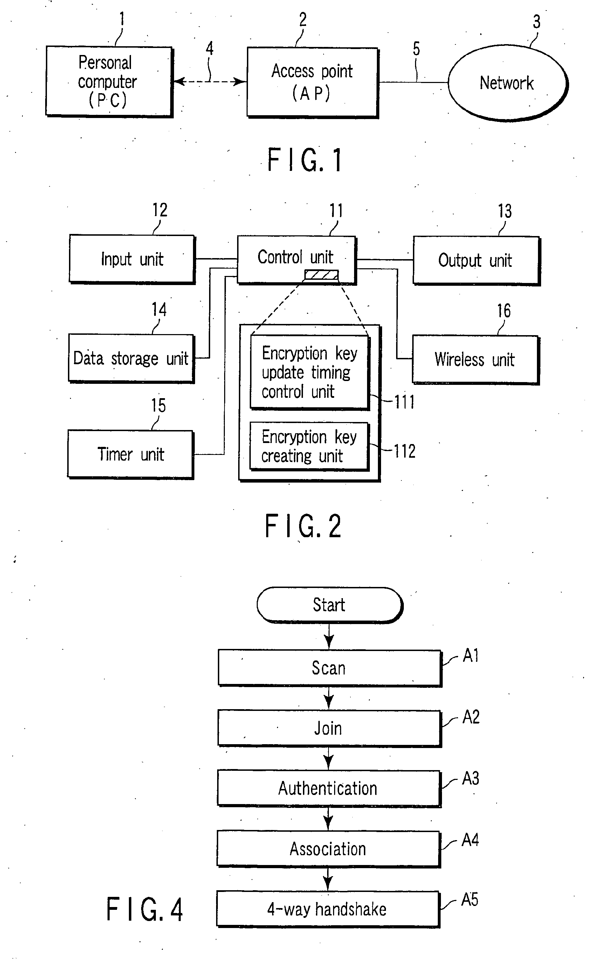

FIG. 1 shows the connection form of a wireless LAN communication system according to the first embodiment of the present invention. A personal computer 1 is an information processing apparatus as of a notebook type equipped with a wireless communication function. The personal computer 1 is connected to a network 3 through an access point 2, as needed. Various information processing apparatuses such as another personal computer are connected to the network 3, and an external network is further connected to it. The personal computer 1 can transmit/receive data to/from them.

The access point 2 is a relay apparatus which relays between the personal computer 1 and the network 3. The access point 2 forms a wireless service area for a wireless LAN 4 aimed at the personal computer 1, and is accommodated in the network 3 through a wired LAN cable 5. That is, the personal computer 1 and access point 2 are electronic apparatuses which wirelessly transmit/receive data, and both have functions of encrypting data by using encryption keys when transmitting the data. The wireless LAN communication system of the first embodiment is characterized in that the personal computer 1 and access point 2 can update encryption keys at proper timings. This point will be described in detail below. Note that the following description will be focused on the personal computer 1, assuming that the personal computer 1 takes the initiative to control updating of an encryption key.

FIG. 2 is a block diagram showing the arrangement of the personal computer 1. As shown in FIG. 2, the personal computer 1 includes a control unit 11, input unit 12, output unit 13, data storage unit 14, timer unit 15, and wireless unit 16.

The control unit 11 performs various control operations of the personal computer 1 and includes an encryption key update timing control unit 111 and encryption key creating unit 112 (to be described later). The input unit 12 inputs various kinds of information and operation instructions through, for example, a keyboard and mouse. The output unit 13 outputs various kinds of information through, for example, a display and loudspeakers. The data storage unit 14 is a memory device such as an EEPROM or HDD in which various kinds of data are stored. The timer unit 15 is a timer module which includes, for example, its own power supply and counts the system time used by the personal computer 1. The wireless unit 16 executes wireless communication complying with, for example, the IEEE802.11i protocol.

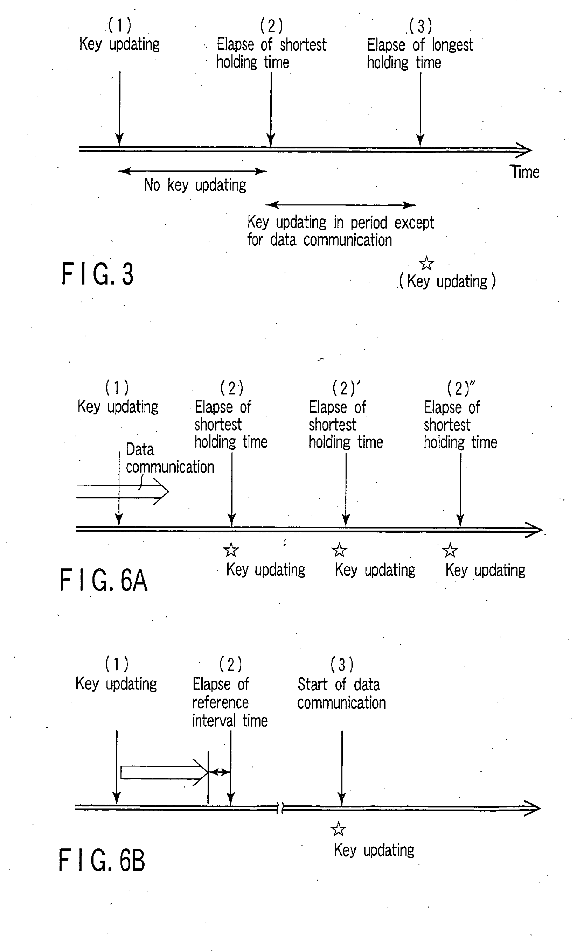

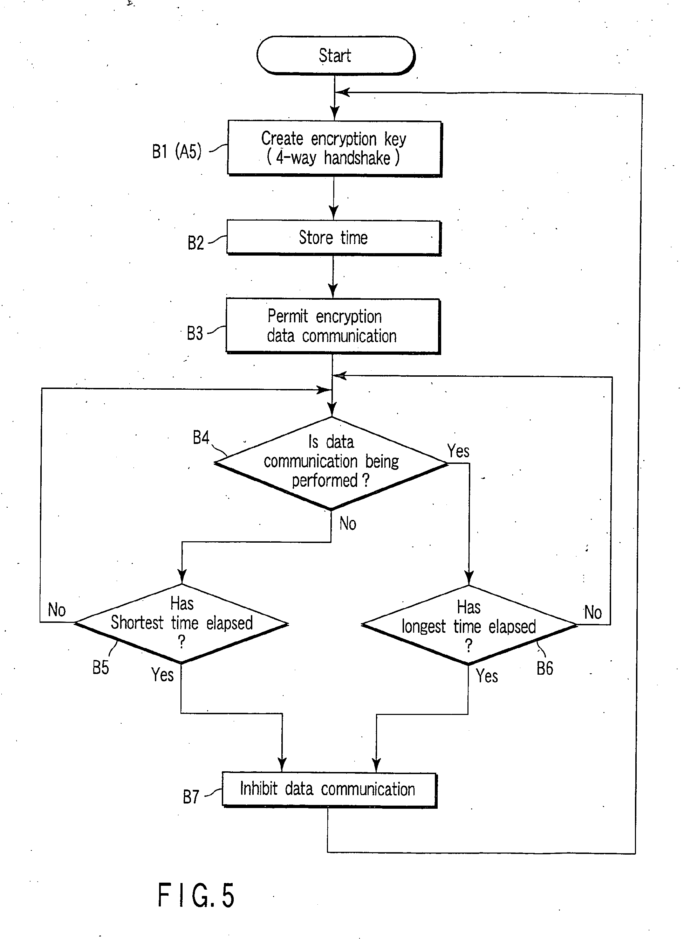

As described above, the personal computer 1 wirelessly transmits/receives data to/from the access point 2, and takes the initiative to update an encryption key for encrypting transmission data. The encryption key update timing control unit 111 controls the update timing of the encryption key. The encryption key creating unit 112 creates/updates an encryption key in synchronism with the access point 2 as a communication partner. The principle on which the encryption key update timing control unit 111 selects an encryption key update timing will be described with reference to FIG. 3.

When the encryption key creating unit 112 creates/updates an encryption key ((1) in FIG. 3), the encryption key update timing control unit 111 acquires the corresponding time from the timer unit 15. The encryption key update timing control unit 111 has acquired the shortest holding time data and longest holding time data stored in the data storage unit 14, and subsequently monitors whether or not the elapsed time since the creation/updating of this encryption key has reached the shortest holding time or longest holding time.

A pair of the shortest holding time and the longest holding time define the allowable range of an encryption key update interval. The shortest holding time is set to prevent unnecessary updating of an encryption key. The longest holding time is set to ensure safety. These times are set by a user through the GUI provided by the control unit 11 or the like and stored in the data storage unit 14.

The encryption key update timing control unit 111 therefore inhibits the encryption key creating unit 112 from creating/updating an encryption key until the shortest holding time has elapsed since the previous creation/updating of an encryption key ((2) in FIG. 3). When this shortest holding time has elapsed, the encryption key update timing control unit 111 monitors whether or not wireless communication is executed by the wireless unit 16. Upon detecting a state wherein no wireless communication is executed, the encryption key update timing control unit 111 causes the encryption key creating unit 112 to create/update an encryption key at this timing. This prevents the update processing of the encryption key from affecting data communication processing.

Assume that the elapsed time since the previous creation/updating of an encryption key has reached the longest holding time ((3) in FIG. 3) while a state wherein no wireless communication is executed is not detected, i.e., the timing for the creation/updating of an encryption key is not obtained. In this case, the encryption key update timing control unit 111 instructs the wireless unit 16 to temporarily interrupt the wireless communication at this timing, and causes the encryption key creating.unit 112 to create/update the encryption key. This makes it possible to ensure the safety of wireless data communication.

In this manner, the encryption key update timing control unit 111 realizes encryption key updating at a proper timing in consideration of the balance between efficiency and safety.

An operation sequence for encryption key updating control which is executed by the personal computer 1 will be described next with reference to FIGS. 4 and 5.

The flow of processing up to the creation of the first encryption key by the personal computer 1 through association/authentication with the access point 2 will be described first with reference to FIG. 4.

First of all, the control unit 11 executes scanning to check whether or not the access point 2 is present nearby (step A1). If it is determined that the access point 2 is present nearby, the control unit 11 joins the access point 2 and synchronizes with the access point 2 (step A2).

Upon establishing the synchronization, the control unit 11 executes authentication (step A3). The authentication in this case is called open system authentication; when the personal computer 1 gives an authentication request, the access point 2 directly receives the authentication request without performing any special authentication processing.

The control unit 11 then performs association with the access point 2 (step A4). When this association is complete, the encryption key creating unit 112 executes encryption key creation called 4 way handshake (and group key handshake) together with the access point 2 (step A5).

FIG. 5 is a flowchart showing the flow of encryption key update timing control performed by the personal computer 1.

Upon causing the encryption key creating unit 112 to create an encryption key by the above 4 way handshake (and group key handshake), the encryption key update timing control unit 111 acquires and stores the system time from the timer unit 15 (step B2). The encryption key update timing control unit 111 then gives the wireless unit 16 an instruction to permit encryption data communication (step B3), and starts monitoring whether or not wireless communication is executed by the wireless unit 16 (step B4).

If no data communication is being executed (NO in step B4), the encryption key update timing control unit 111 checks whether or not the shortest holding time of an encryption key update interval has elapsed (step . B5). If the shortest holding time has not elapsed (NO in step B5), the flow returns to step B4 to check whether or not data communication is being executed. If the shortest holding time has elapsed while no data communication is being executed (YES in step B5), the encryption key update timing control unit 111 gives the wireless unit 16 an instruction to inhibit encryption data communication at this point of time (step B6) to stop encryption data communication. The flow then returns to step B1 to cause the encryption key creating unit 112 to create an encryption key.

If data communication is being executed (YES in step B4), the encryption key update timing control unit 111 checks whether or not the longest holding time of an encryption key update interval has elapsed (step B7). If the longest holding time has not elapsed (NO in step B7), the flow returns to step B4 to check whether or not data communication is being executed. 'If the longest holding time has elapsed while this data communication is being executed (YES in step B7), the encryption key update timing control unit 111 gives the wireless unit 16 an instruction to inhibit encryption data communication at this point of time (step 86) to stop encryption data communication. The flow then returns to step B1 to cause the encryption key creating unit 112 to create an encryption key by 4 way handshake (and group key handshake).

Executing the above control makes it possible to reduce the occurrence of encryption key updating during data communication while maintaining necessary safety. In addition, setting the longest holding time can inhibit unnecessary encryption key updating while no data communication is performed.

### (Second Embodiment)

The second embodiment of the present invention will be described next.

In the wireless LAN communication system of the first embodiment described above, the personal computer 1 has the initiative of encryption key updating controls encryption key update timings on the basis of the shortest holding time and longest holding time. In contrast to this, a wireless LAN system according to the second embodiment controls encryption key update timings by using a reference interval time for the determination of whether.or not encryption data communication has ceased for a predetermined period of time or more, in place of the shortest holding time. In this wireless LAN communication system, it is determined that encryption data communication which has occurred after the lapse of the reference interval time or more is new data communication, and the encryption key is updated at the start of the data communication. This reference interval time is also data to be set by a user through the GUI provided by a control unit 11 or the like and stored in a data storage unit 14. An encryption key update timing control unit 111 acquires this data at the time of startup or the like.

FIGS. 6A and 6B are charts for explaining the encryption key update timing selection principle of the encryption key update timing control unit 111 according to the second embodiment.

Assume that after given encryption data communication is complete, encryption data communication ceases for a long period of time. In this case, according to the first embodiment, as shown in FIG. 6A, the encryption key creating unit 112 repeatedly creates/updates an encryption key every time the shortest holding time elapses ((2), (2)', (2)", ... in FIG. 6A). Since these encryption keys have never been used, there is no possibility that the keys have been stolen. That is, encryption keys are unnecessarily updated.

In the second embodiment, therefore, if encryption data communication ceases for the reference interval time after given encryption data is complete ((2) in FIG. 6B), the start of next encryption data communication is monitored. If the start of encryption data communication is detected ((3) in FIG. 6B), the encryption key creating unit 112 is caused to create/update an encryption key at this timing.

That is, in the second embodiment, an encryption key is not updated unnecessarily as in the case indicated by (2), (2)', and (2)" in FIG. 6A. In addition, updating an encryption key at the start of new encryption data communication makes it possible to reduce the accidental occurrence of encryption key updating as in a case wherein the shortest holding time has elapsed immediately after the start of new encryption data communication, and the longest holding time has then elapsed in this state, i.e., the occurrence of encryption key updating during encryption data communication like that indicated by (1) in FIG. 6A.

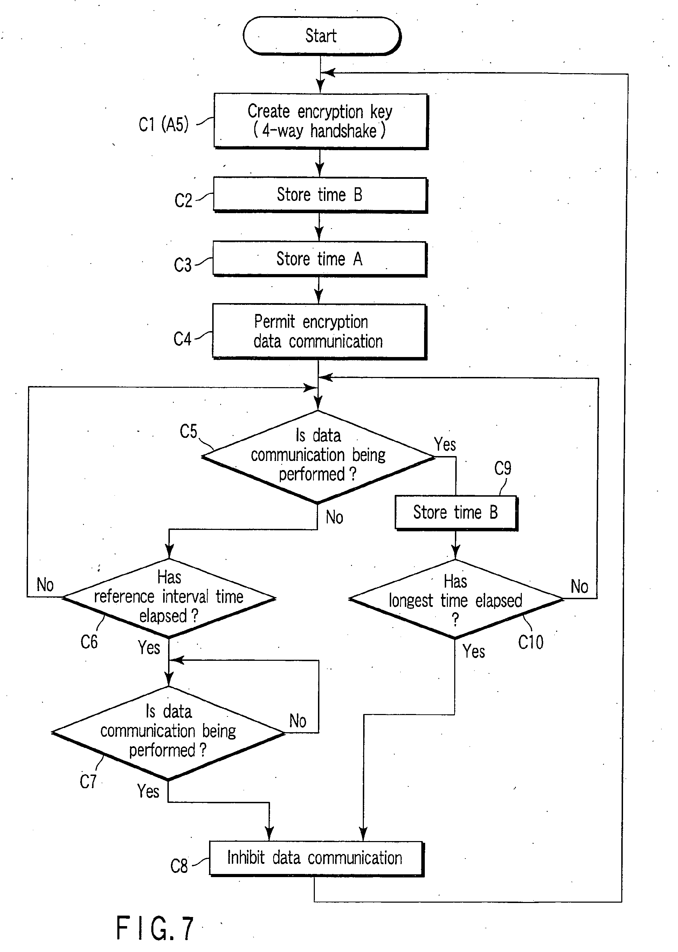

FIG. 7 is a flowchart showing the flow of encryption key update timing control performed by the personal computer 1 according to the second embodiment.

Upon causing the encryption key creating unit 112 to create an encryption key (step C1), the encryption key update timing control unit 111 acquires and stores the system time (time B) from a timer unit 15 (step C2). Acquiring the time B in this case is equivalent to clearing a start point for the calculation of a period of time during which data communication ceases. At this time, the encryption key update timing control unit 111 stores the acquired system time as the time (time A) at which the encryption key was created (step C3). The'encryption key update timing control unit 111 then gives a wireless unit 16 an instruction to permit encryption data communication (step C4), and starts monitoring whether or not wireless communication is executed by the wireless unit 16 (step C5).

If no data communication is being executed (NO in step C5), the encryption key update timing control unit 111 checks whether or not the time B, i.e., the elapsed time since the last data communication, has reached the reference interval time (step C6). If the time B has not reached the reference interval time (NO in step C6), the flow returns to step C5 to check whether or not data communication is being executed. If the elapsed time has reached the reference interval time (YES in step C6), the encryption key update timing control unit 111 starts monitoring the execution/non execution of wireless communication by the wireless unit 16 to detect whether or not wireless communication is started by the wireless unit 16 (step C7). If wireless communication is started by the driving circuit 6 (YES in step C7), the encryption key update timing control unit 111 gives the wireless unit 16 an instruction to inhibit encryption data communication at this point of time (step C8) to stop the encryption data communication. The flow then returns to step C1 to cause the encryption key creating unit 112 to create an encryption key by 4 way handshake (and'group key handshake). In this case, although the start of data communication is delayed because the data communication is stopped before the start of the data communication, no data interruption occurs.

If data communication is being executed (YES in step C5), the encryption key update timing control unit 111 acquires and stores the system time (time B) from the timer unit 15 again (step C9). The encryption key update timing control unit 111 then checks whether or not the longest holding time of an encryption key update interval has elapsed (step C10). If the longest holding time has not elapsed (NO in step C10), the flow returns to step C5 to check whether or not data communication is being executed. If the longest holding time has elapsed at the time of execution of data communication (YES in step C9), the encryption key update timing control unit 111 gives the wireless unit 16 an instruction to inhibit encryption data communication (step C8) to stop the encryption data communication. The flow then returns to step C1 to cause the encryption key creating unit 112 to create an encryption key by 4 way handshake (and group key handshake).

With the above control, since the continuous communication time from the start of data communication directly becomes the maximum update interval for an encryption key, the probability of executing encryption key updating during data communication can be further reduced while safety is maintained.

## Claims

1. An electronic apparatus **characterized by** comprising:
data communication means (16);
encryption key creating means (112) for creating an encryption key used for encryption of data to be transmitted by the data communication means;
monitoring means (111) for monitoring a data communication state of the data communication means;
time calculating means (111) for calculating an elapsed time since an encryption key is created by the encryption key creating unit; and
encryption key updating control means (111) for causing the encryption key creating means to create a new encryption key at a timing at which a state in which no data communication is being executed is detected by the monitoring means after the elapsed time calculated by the time calculating unit reaches a predetermined shortest holding time.

2. The electronic apparatus according to claim 1, **characterized in that** the encryption key updating control means causes the encryption key creating unit to create a new encryption key at a timing at which the time calculated by the time calculating unit has reached a predetermined longest holding time while a state in which no data communication is being executed is not detected by the monitoring unit.

3. The electronic apparatus according to claim 2, **characterized in that** the encryption key updating control means causes the data communication unit to interrupt data communication when the encryption key creating means is caused to create a new encryption key at a timing at which the time has reached longest holding time.

4. The electronic apparatus according to claim 1, **characterized in that** the data communication unit executes wireless communication complying with IEEE802.11i protocol, and the encryption key creating unit creates the encryption key by executing 4 way handshake processing.

5. The electronic apparatus according to claim 2, **characterized by** further comprising:
storage means (14) for storing the shortest holding time and the longest holding time; and
setting means (111) for setting the shortest holding time and the longest holding time stored in the storage means.

6. An electronic apparatus **characterized by** comprising:
data communication means (16);
encryption key creating means (112) for creating an encryption key used for encryption of data to be transmitted by the data communication means;
monitoring means (111) for monitoring a data communication state of the data communication means;
first time calculating means (111) for calculating an elapsed time of a state in which after an end of data communication is detected by the monitoring means, a start of next data communication is not detected; and
encryption key updating control means (111) for causing the encryption key creating means to create a new encryption key at a timing at which the start of data communication is detected by the monitoring means after the elapsed time calculated by the first time calculating unit has reached a predetermined reference interval time.

7. The electronic apparatus according to claim 6, **characterized by** further comprising second time calculating means (111) for calculating an elapsed time since an encryption key is created by the encryption key creating unit, and
the encryption key updating control means causes the encryption key creating means to create a new encryption key at a timing at which an elapsed time calculated by the second time calculating means has reached a predetermined encryption key holding time while a state in which data communication is being executed is detected by the monitoring means.

8. The electronic apparatus according to claim 7, **characterized in that** the encryption key updating control means causes the data communication means to interrupt data communication when the encryption key creating means is caused to create a new encryption key at a timing at which the elapsed time has reached the encryption key holding time.

9. The electronic apparatus according to claim 6, **characterized in that** the data communication means executes wireless communication complying with IEEE802.11i protocol, and the encryption key creating means creates the encryption key by executing 4 way handshake processing.

10. The electronic apparatus according to claim 7, **characterized by** further comprising:
storage means (14) for storing the reference interval time and the encryption key holding time; and
setting means (111) for setting the reference interval time and the encryption key holding time stored in the storage means.

11. An encryption key updating control method for an electronic apparatus having data communication means and encryption key creating means for creating an encryption key used for encryption of data to be 'transmitted by the data communication unit, the method **characterized by** comprising the steps of:
monitoring (B4) a data communication state of the data communication unit;
calculating an elapsed time since an encryption key is created by the encryption key creating unit; and
causing (B5) the encryption key creating unit to create a new encryption key at a timing at which a state in which no data communication is being executed is detected after the calculated elapsed time reaches a predetermined shortest holding time.

12. The encryption key updating control method according to claim 11, **characterized by** further comprising the steps of causing (B6) the encryption key creating means to create a new encryption key at a timing at which the calculated elapsed time has reached a predetermined longest holding time while a state in which no data communication is being executed is not detected.

13. An encryption key updating control method for an electronic apparatus having data communication means and encryption key creating means for creating an encryption key used for encryption of data to be transmitted by the data communication means, the method **characterized by** comprising the steps of:
monitoring (C5) a data communication state of the data communication means;
calculating a first elapsed time of a state in which after an end of data communication is detected, a start of next data communication is not detected; and
causing (C6, C7) the encryption key creating means to create a new encryption key at a timing at which the start of data communication is detected after the calculated first elapsed time has reached a predetermined reference interval time.

14. The encryption key updating control method according to claim 13, **characterized by** further comprising the steps of:
calculating a second elapsed time since an encryption key is created by the encryption key creating means; and
causing (C10) the encryption key creating means to create a new encryption key at a timing at which the second elapsed time has reached a predetermined encryption key holding time while a state in which data communication is being executed is detected.
